Europäisches Patentamt

(19) European Patent Office

Office européen des brevets

(11) Veröffentlichungsnummer: **0 036 980**
**A1**

(12) **EUROPÄISCHE PATENTANMELDUNG**

(21) Anmeldenummer: **81101808.4**

(22) Anmeldetag: **12.03.81**

(51) Int. Cl.³: **F 16 K 11/00**

(30) Priorität: **27.03.80 DE 3011972**

(43) Veröffentlichungstag der Anmeldung:
**07.10.81 Patentblatt 81/40**

(84) Benannte Vertragsstaaten:
**AT BE CH DE FR GB IT LI LU NL**

(71) Anmelder: **Knorr-Bremse GmbH**
**Moosacher Strasse 80**
**D-8000 München 40(DE)**

(72) Erfinder: **Michalka, Helmut**
**Alspitzweg 8**
**D-8011 Heimstetten(DE)**

(54) **Mehrwegeventil.**

(57) Mehrwegeventil mit mindestens einem länglichen elastischen ersten Ventilkörper (16) der innerhalb eines Ventilgehäuses (1) axial wenigstens einen Ventilsitz (12) und zusätzlich radial einen weiteren Ventilsitz (23) betätigt, wobei in den beiden Schaltstellungen wechselweise der eine Ventilsitz offen und der andere geschlossen ist. Der längliche elastische Ventilkörper kann mit einem längeren elastischen zweiten Ventilkörper (29) kombiniert sein, der nur radial einen Ventilsitz (34) steuert. Darüber hinaus kann der längliche elastische erste Ventilkörper (16) auch mit mehreren insbesondere vier länglichen elastischen zweiten Ventilkörpern (29) kombiniert sein.

Fig. 1

EP 0 036 980 A1

Croydon Printing Company Ltd.

Knorr-Bremse GmbH
Moosacher Str. 80

8000 München  40

München, 7.3.1980
TP1-pd/si

- 1614 -

M e h r w e g e v e n t i l

Die Erfindung bezieht sich auf ein Mehrwegeventil, insbesondere pneumatisches 3/2- oder 4/2-Wege-Sitzventil mit mindestens einem von einem Strömungsmitteldruck beaufschlagbaren elastischen Ventilkörper der innerhalb eines Ventilgehäuses mehrere Schaltstellungen einnehmen kann.

Es sind mehr Wegeventile der eingangs genannten Art bekannt und zwar sowohl als Schieberventile als auch als Sitzventile. In beiden Fällen handelt es sich um vielteilige Ventileinheiten, die hohem Verschleiß unterliegen, über ausreichend  lange Zeiträume nicht sicher wartungsfrei arbeiten und bedingt durch den hohen Fertigungs- und Montageaufwand sehr kostenaufwendig sind. Bei Schieberventilen mit  elastischen Dichtungen die geschmiert werden müssen, kommt die Umweltbelastung aufgrund der ins Freie austretenden Schmiermittel hinzu. Bekannte metallisch dichtende Schieberventile sind von den Kosten her in vielen Fällen nicht vertretbar.

Aufgabe der Erfindung ist es daher ein Mehrwegeventil, insbesondere ein pneumatisches 3/2- oder 4/2-Wege-Sitzventil der eingangs genannten Art anzugeben, das aus nur wenigen Einzelteilen ohne wesentlichem Montageaufwand zusammengesetzt werden kann, wobei die einzelnen Ventilbauteile einfach und kostengünstig herstellbar sind und die beweglichen Teile einem geringen Verschleiß unterworfen sind, so daß das Ventil über ausreichend lange Zeiträume ohne jede Umweltbelastung wartungsfrei arbeitet.

Die Aufgabe wird erfindungsgemäß mit den kennzeichnenden Merkmalen des Anspruchs 1 gelöst.

2

Vorteilhafte Ausführungen und Weiterbildungen des erfindungsgemäßen Mehrwegeventils ergeben sich aus einem oder mehreren Unteransprüchen für sich oder in Kombination mit den Merkmalen des Hauptanspruches oder wenigstens eines übergeordneten Unteranspruches.

Die Erfindung wird nachstehend anhand von Ausführungsbeispielen mehr im einzelnen beschrieben und erläutert. In der zugehörigen schematischen Zeichnung zeigt:

Fig. 1 ein 3/2-Wegeventil nach der Erfindung,

Fig. 2 ein 4/2-Wegeventil in axialer Bauweise,

Fig. 3 ein 4/2-Wegeventil in Parallelbauweise,

Fig. 4 ein weiteres 4/2-Wegeventil in axialer Bauweise und

Fig. 5 eine Teilansicht eines 4/2-Wegeventil entsprechend Fig. 4 in einer gegenüber Fig. 4 abgeänderten Form,

Fig. 6a bis f  ein 5/2-Wege-Ventil nach der Erfindung

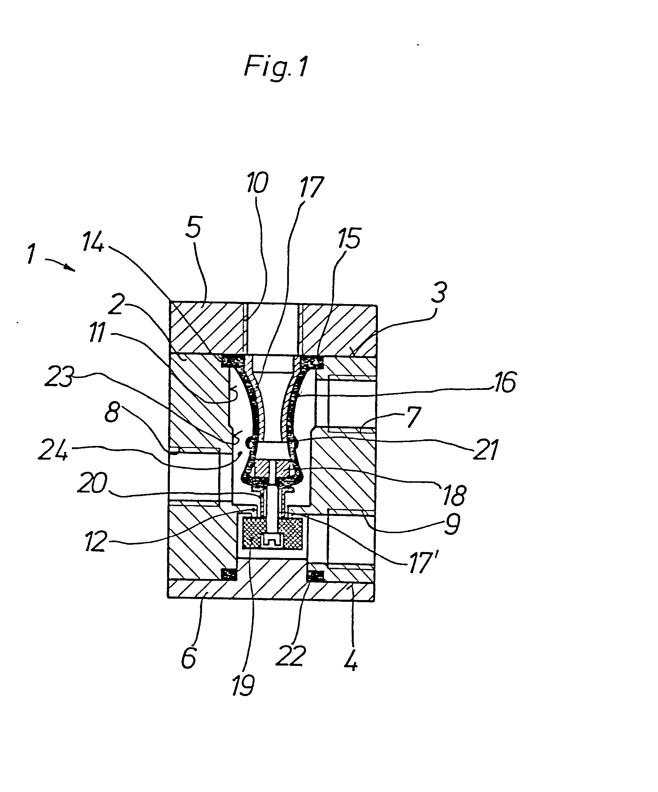

In Fig. 1 ist ein pneumatisches 3/2-Wegeventil im Schnitt dargestellt. Das kompakte Ventilgehäuse 1 besteht aus einem zentralen Gehäuseteil 2 mit zwei parallelen Stirnflächen 3 und 4. Die Stirnflächen 3 und 4 sind jeweils von einem Deckel 5 bzw. 6 abgeschlossen. Im zentralen Gehäuseteil 2 sind drei pneumatische Anschlüsse 7,8 und 9 vorhanden. Im Deckel 5 ist der vierte Anschluß 1o vorgesehen.

Das Gehäuseteil 2 besitzt eine durchgehende zentrale Ausnehmung, zum Beispiel eine Bohrung 11. Quer zu der Ausnehmung 11 liegen die pneumatischen Anschlüsse 7,8 und 9, die an die Ausnehmung 11 anschließen. Die Anschlüsse 7 und 8 liegen an gegenüberliegenden Seiten des Gehäuseteiles 2 versetzt zueinander. Unterhalb des Anschlusses 8 ist die Ausnehmung 11 zur Bildung eines Ventilsitzes 12 eingeschnürt. In der oberen Stirnfläche 3 des Gehäuseteiles 2 befindet sich koaxial zur Ausnehmung 11 eine Ringnut 14 die einen äußeren Wulstring 15 eines länglichen Ventilkörpers aus einem     elastischen Material aufnimmt. Innerhalb des Ventilkörpers 16 befindet sich ein hohler steifer Einsatzkörper 17, der verhindert, daß der von außen druckbeaufschlagte Ventilkörper über das dargestellte Maß hinaus radial nach innen gedrückt werden kann. Der hohle hülsenartige Einsatzkörper 17 erstreckt sich nicht über die ganze innere Länge des Ventilkörpers 16. Im Boden des Ventilkörpers 16 befindet sich eine zentrale Öffnung, durch die ein Bolzen 17' ragt. Der Bolzen 17' greift innerhalb des Ventilkörpers 16 in eine Mutter 18 oder der gleichen Körper mit einem Innengewinde ein. An dem Bolzen 17' ist ein Ventilschließkörper 19 aus elastischem Material gehalten, der in dem unteren Abschnitt der Ausnehmung 11 zwischen dem Ventilsitz 12 und dem Boden des Deckels 6 angeordnet ist. Zwischen dem Ventilschließkörper 19 und dem äußeren Boden des Ventilköreprs 16 ist ein Distanzkörper 20 eingespannt, der durch die Öffnung des Ventilsitzes 12 ragt.

Der Ventilkörper 16 besitzt einen äußeren Wulstring 21, der den Ventilkörper etwa im unteren Drittel über seiner Gesamtlänge gürtelartig umfaßt. Der Deckel 6 schließt mittels einer Dichtung 22 an das Gehäuseteil 2 dicht an. Der Deckel 5 schließt über den Wulstring 15 des Ventilkörpers 16 dicht an das Gehäuseteil 2 an. Gleichzeitig wird dabei der Ventilkörper 16 in der Nut 14 des Gehäuseteiles 2 fest eingespannt.

Der Ventilkörper 16 ist in Fig. 1 in der Stellung dargestellt, in der der Ventilsitz 12 vom Ventilschließkörper 19 abgeschlossen ist und der äußere Wulstring 21 am Ventilkörper 16 einen radialen Abstand von der ihn umgebenden Gehäusewand 23 der Ausnehmung 11 aufweist. Die Anschlüsse 7 und 8 sind damit über die Ausnehmung 11 und den freien Ringspalt 24 zwischen dem Wulstring 21 und der Gehäusewand 23 miteinander verbunden, während beide Anschlüsse 7 und 8 durch den geschlossenen Ventilsitz 12 von dem Anschluß 3 abgesperrt sind.

Im Beispielsfalle ist an den Anschluß 7 die Versorgung angeschlossen und an den Anschluß 8 der Verbraucher. Unter dem Versorgungsdruck

4

wird der elastische Ventilkörper 16 radial nach innen gegen den Einsatzkörper 17 gedrückt.

Im drucklosen Zustand liegt der Ventilkörper mit seinem Wulstring 21 unter einer gewissen Vorspannung an der Gehäusewand 23 an. Der Ventilschließkörper kann sich dabei gegenüber dem Ventilsitz 12 in der Schließstellung befinden. Der Ventilsitz kann aber auch geöffnet sein. Wird an den Anschluß 10 ein Steuersignal gegeben, so wird der Ventilkörper radial nach außen aufgebläht, wobei der Wulstring 21 dicht an der Gehäusewand 23 zur Anlage kommt. Gleichzeitig verlängert sich der Ventilkörper 16 durch das Aufblähen in Achsrichtung derart, daß der Ventilschließkörper 19 von dem Ventilsitz 12 sicher freikommt. Damit ist der Anschluß 7 von dem Anschluß 8 abgesperrt, im Beispielsfalle die Versorgung zum Verbraucher unterbrochen, und der Anschluß 8 ist über den offenen Ventilsitz 12 an den Anschluß 9 angeschlossen. Ist der Anschluß 9 zur Atmosphäre offen, so ist damit bei dem gewählten Beispiel der Verbraucher über den Anschluß 9 entlüftet.

Wird das Signal an dem Anschluß 10 wieder weggenommen, so hebt der Wulstring 21 am Ventilkörper 16 aufgrund des Versorgungsdruckes in dem Anschluß 7 von der Gehäusewand 23 wieder ab. Der Versorgungsdruck aus dem Anschluß 7 beaufschlagt damit erneut den Ventilkörper 16, der radial nach innen gegen den Einsatzkörper 17 gedrückt wird, wobei der Ventilkörper sich axial verkürzt und dadurch der Ventilschließkörper 19 an dem Ventilsitz 12 dicht zur Anlage kommt. Damit ist die Versorgung erneut an den Verbraucher angeschlossen und dieser wird von der Entlüftung abgesperrt.

Es ist klar, daß die Versorgung auch an den Anschluß 9 und die Entlüftung dementsprechend an den Anschluß 7 gelegt werden kann. Im dargestellten Falle wird durch ein Druckmittelsignal am Anschluß 10 die Versorgung vom Verbraucher abgeschaltet und dieser entlüftet während im anderen Falle durch das Druckmittelsignal am Anschluß 10 der Verbraucher an die Versorgung angeschlossen von der Entlüftung abgesperrt wird.

Das erfindungsgemäße Ventil 1 nach Fig. 1 kann als Grundbaustein zum Aufbau von pneumatischen Schaltungen dienen, die aus mehreren 3/2-Wegeventilen aufgebaut sind.

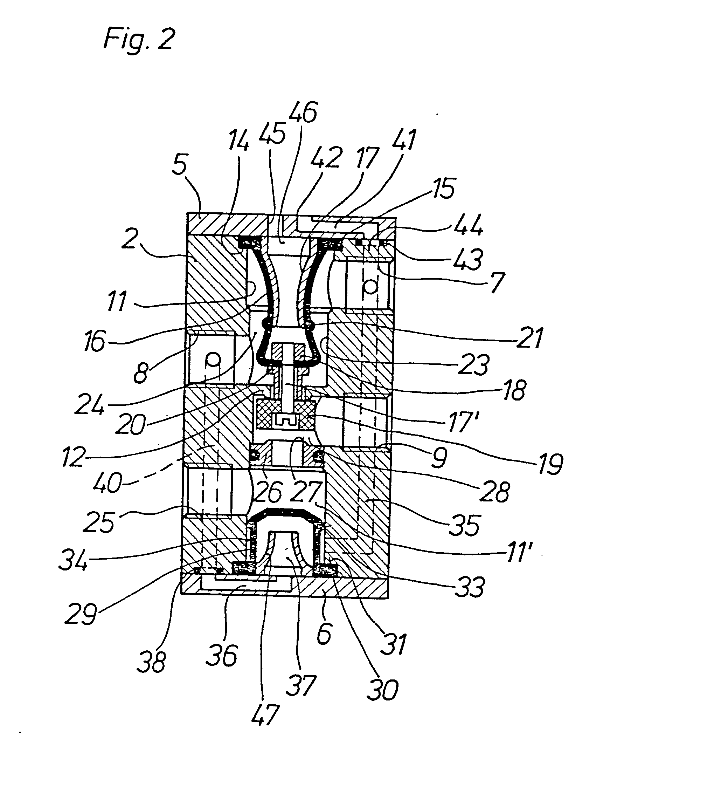

Fig. 2 zeigt ein erfindungsgemäßes 4/2-Wegeventil in dem das 3/2-Wegeventil nach Fig. 1 mit enthalten ist. Teile des 4/2-Wegeventils, die Teilen des 3/2-Wegeventils nach Fig. 1 entsprechen, sind mit den gleichen Bezugszeichen versehen. Anders als in Fig. 1 ist aber das Ventilgehäuse 2 nach Fig. 2 axial in der Zeichnung nach unten verlängert, so daß zu den Anschlüssen 7, 8 und 9 ein zusätzlicher Anschluß 25 vorgesehen werden kann, der ebenfalls an die nach unten verlängerte Gehäuseausnehmung 11 anschließt.

In der Ausnehmung 11 ist unterhalb des Anschlusses 9 und oberhalb des Anschlusses 25 ein Ringkörper 26 dicht eingesetzt, der an seinem inneren Öffnungsrand einen Ventilsitz 27 bildet, der dem Ventilschließkörper 19 zugewandt ist. Der Ventilsitz 27 weist von dem Ventilsitz 12 einen solchen Abstand auf, daß der Ventilschließkörper 19 in Abhängigkeit von der Druckmittelbeaufschlagung des Ventilkörpers 16 einen von beiden freigibt und den anderen absperrt. Die sich gegenüberliegenden Ventilsitze 12 und 27 begrenzen damit eine Ventilkammer 28, in der der Ventilschließkörper 19 zwischen den beiden Ventilsitzen 12 und 27 axial verschieblich ist.

Die Ventilkammer 28 ist an den Anschluß 9 angeschlossen, der somit bei geschlossenem Ventilsitz 12 über den offenen Ventilsitz 27 an den Anschluß 25 angeschlossen und bei offenem Ventilsitz 12 und geschlossenem Ventilsitz 27 über den offenen Ventilsitz 12 an den Anschluß 8 angeschlossen ist.

In den unteren Abschnitt 11' der das Ventilgehäuse 2 durchdringenden Ausnehmung 11 ist von unten her ein zweiter elastischer Ventilkörper 29 eingesetzt, der im Prinzip ähnlich wie der erste Ventilkörper 16 ausgebildet ist und eine topfförmige Gestalt besitzt. Der zylindrische Ventilkörper 29 besitzt an seinem offenen Ende einen umlaufenden Wulstrand 3o, der in eine Gehäusenut 31 eingreift. Durch Aufsetzen eines Gehäusedeckels 6 wird entsprechend wie mit dem gegenüberliegenden Gehäusedeckel 5 der Wulstrand 30 fest in die Nut 31 gezwengt, wodurch der Ventilkörper 30 in der Ausnehmung fest und dicht gehalten ist und außerdem der Deckel 6 an das Gehäuse 2 dicht anschließt.

Der Außendurchmesser des topfförmigen Ventilkörpers 29 ist nur wenig kleiner als der Innendurchmesser des Abschnittes 11' der Ausnehmung 11. Nahe dem abgeschlossenen Boden des zweiten Ventilkörpers weist dieser außenseitig einen umlaufenden Wulstring 33 auf, der dem Wulstring 21 des ersten Ventilkörpers 16 entspricht.

Im drucklosen Zustand liegt der Wulstring 33 mit einer gewissen elastischen Vorspannung an der den Wulstring umgebenden zylindrischen Innenwandungsfläche 34 der Ausnehmung 11 an. Der freie Ringraum des Abschnittes 11' der Ausnehmung 11 zwischen dem Wulstrand 30 und dem Wulstring 33 ist an einen Gehäusekanal 35 angeschlossen, der zu dem Anschluß 7 führt. Schließlich ist im Gehäusedeckel 6 ein Kanal 36 vorgesehen, der an den Steuerraum 37 angeschlossen ist, und bei dessen Druckbeaufschlagung der Ventilkörper 29 nach außen aufgebläht wird, um dadurch den Wulstring 33 dicht an der Innenwandfläche 34 zur Anlage zu bringen. Der Kanal 36 im Gehäusedeckel 6 ist außerdem über eine Gehäusedichtung 38 an einen Gehäusekanal 40 angeschlossen, der den Kanal 36 und damit den Steuerraum 37 mit dem Anschluß 8 verbindet. Ein Kanal 41, entsprechend dem Kanal 36 befindet sich in dem anderen Gehäusedeckel 5, der zum Anschluß an den Steuerraum eines nicht gezeigten Magnetventils in einer Deckelöffnung 42 nach außen austritt und zum Gehäuseinneren über eine Gehäusedichtung 43 an einen Gehäusekanal 44 angrenzt, der zum Anschluß 7 führt. Schließlich ist im Gehäusedeckel 5 eine durchgehende Öffnung 45 vorhanden, die an den Steuerraum 46 zur Druckbeaufschlagung des ersten Ventilkörpers 16 anschließt. Die Öffnungen 42 und 45 liegen relativ dicht nebeneinander, so daß ihre Verbindung durch ein Magnetventil gesteuert werden kann. Innerhalb des zweiten Ventilkörpers 29 ist eine starre, hohle Hülse 47 angeordnet, die entsprechend der Hülse 17 im ersten Ventilkörper 16 verhindert, daß bei einer Druckbeaufschlagung des zweiten Ventilkörpers von außen dieser nicht stärker zusammengedrückt wird, als es die äußere Kontur der starren Hülse 47 zuläßt.

Der Anschluß 7 kann an eine Druckluftversorgung angeschlossen sein, während der Anschluß 9 zur Atmosphäre bzw. zur Umgebung offengehalten ist. Der Anschluß 8 kann an einen ersten Verbraucher und der Anschluß 25 kann an einen zweiten Verbraucher angeschlossen sein. Es kann sich, wie zum Beispiel bei einem beidseitig beaufschlagbaren Kolben, auch um die Anschlüsse zu den entgegengesetzten, durch den Kolben voneinander getrennten Zylinderräume zum Vor- und Zurücksteuern des Kolbens handeln.

Steht der Anschluß 7 unter Druckmitteldruck und ist der Steuerraum 46 des ersten Ventilkörpers 16 nicht von einem Steuerdruck beaufschlagt, dann wird der erste Ventilkörper in die, in Fig. 2 gezeigte Stellung zusammengedrückt, in der er an der inneren Hülse 17 anliegt. Der Wulstring 21 ist dabei von der Innenwandfläche 23 abgehoben, so daß Druckmittel von dem Anschluß 7 über den Ringspalt 24 zum Anschluß 8 gelangen kann, wodurch z.B. ein Kolben in einem Zylinder vorbewegt wird. Druckmittel aus dem Anschluß 7 bzw. 8 gelangt über den Kanal 40 und den Kanal 36 im Deckel 6 auch in den Steuerraum 37, wodurch der Wulstring 33 dicht an der Gehäuseinnenwandfläche 34 zur Anlage kommt. Über die Leitung 35 ist der Ringraum zwischen dem Wulstring 33 und dem Wulstrand 30 des zweiten Ventilkörpers 29 ebenfalls an die Versorgung angeschlossen.

Durch den von dem Versorgungsdruck zusammengedrückten ersten Ventilkörper 16 ist der Ventilschließkörper 19 dicht auf den Ventilsitz 12 gezogen, so daß eine Verbindung zwischen dem Versorgungsanschluß 7 und dem Anschluß 9 unterbunden ist. Dafür ist der Anschluß 25 über den offenen Ventilsitz 27 und den Anschluß 9 entlüftet.

Wird also der Kolben in einem Zylinder durch Druckbeaufschlagung des Anschlusses 8 vorbewegt, so ist gleichzeitig die von der druckbeaufschlagten Kolbenseite abgewandte Seite über die Anschlüsse 25 und 9 entlüftet.

Zum Umschalten des 4/2-Wege-Ventils in Fig. 2 wird der Ventilraum 46 mit einem Steuerdruck beaufschlagt, der über die Öffnung 45 in den Steuerraum 46 des ersten Ventilkörpers 16 gelangt. Der Ventilkörper 16 wird dabei radial nach außen aufgebläht und der Wulstring 21 legt sich abdichtend an die Innenwandfläche 23 an, wodurch der Versorgungsdruck aus dem Anschluß 7 vom Anschluß 8 abgesperrt wird. Gleichzeitig oder etwa gleichzeitig gibt der Ventilschließkörper 19 den Ventilsitz 12 frei und schließt den Ventilsitz 27 ab, da der von einem Steuerdruck aufgeblähte erste Ventilkörper in Achsrichtung elastisch etwas verlängert worden ist. Der Anschluß 8 ist damit über den offenen Ventilsitz 12 und den Anschluß 9 an die Umgebung entlüftet. Außerdem ist auch der Steuerraum 37 des zweiten Ventilkörpers über die Kanäle 36 und 40 in Verbindung mit dem Anschluß 8 entlüftet.

Andererseits ist der Ringraum zwischen dem Wulstring 33 und dem Wulstrand 30 des zweiten Ventilkörpers über den Kanal 35 an den Versorgungsdruck angeschlossen, wodurch der Wulstring 33 von seiner Sitzfläche 34 zum Abheben gebracht wird, so daß Druckmittel nunmehr vom Anschluß 7 über den Kanal 35 und den von seiner äußeren Sitzfläche abgedrückten zweiten Ventilkörper zum Anschluß 25 gelangt. Durch Abschließen des Ventilsitzes 27 durch den Ventilschließkörper 19 am ersten Ventilkörper 16 ist eine Verbindung vom Anschluß 8 zum Anschluß 25 unterbrochen.

Aus dem vorstehenden wird deutlich, daß der zweite Ventilkörper 29 sich von dem ersten Ventilkörper 16 vor allem dadurch unterscheidet, daß er keinen Ventilschließkörper entsprechend dem Ventilschließkörper 19 steuert, sondern nur einen radialen Ventilsitz betätigt.

Es ist ohne weiteres klar, daß das 4/2-Wege-Ventil nach Fig. 2 das 3/2-Wege-Ventil nach Fig. 1 als Bauteil enthalten kann. Wie in Fig. 1 liegt der erste Ventilkörper 16 im drucklosen Zustand mit seinem Wulstring mit einer gewissen Vorspannung an der zylindrischen Innenwandfläche 23 an. Dabei kann der Ventilsitz 12 geschlossen oder nahezu geschossen sein. Der Ventilschließkörper 19 braucht jedenfalls im drucklosen Zustand des Ventils nicht notwendigerweise unter Vorspannung auf dem Ventilsitz 12 aufzuliegen.

Vorteilhaft ist bei dem erfindungsgemäßen Ventil, daß die Ventilkörper 16 bzw. 29 wegen ihres relativ großen Durchmessers beim Abheben ihrer Dichtungsringe von den zugehörigen Sitzflächen anders als bekannte Ventilteller relativ große Querschnitte zum Durchlassen des Druckmittels freigeben.

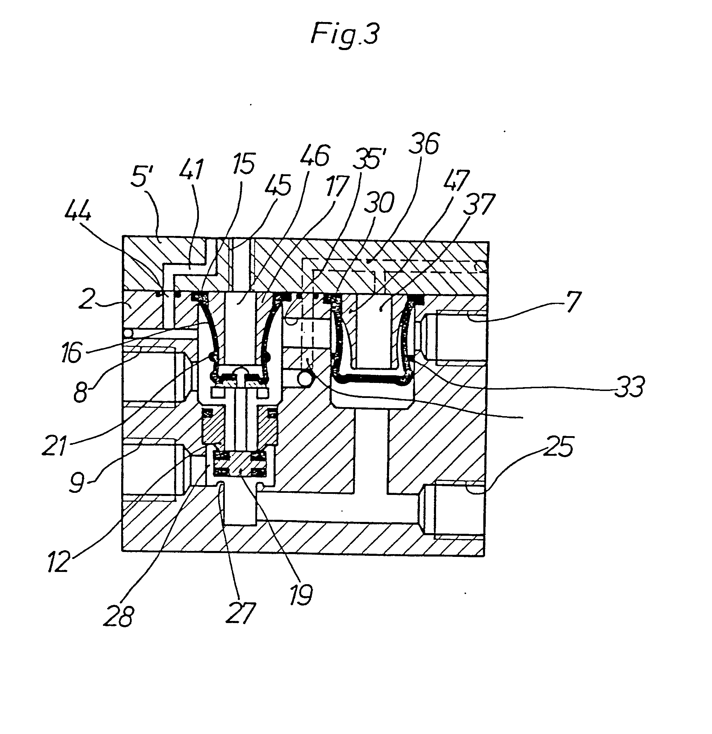

Fig. 3 zeigt im Prinzip das gleiche 4/2-Wege-Ventil wie das Ventil nach Fig. 2, weswegen entsprechende Teile mit dem gleichen Bezugszeichen versehen sind. Das Ventil in Fig. 3 unterscheidet sich von dem Ventil in Fig. 2, vorallem dadurch, daß die beiden Ventilkörper 16 und 29 nicht koaxial zueinander, wie in Fig. 2, sondern nebeneinander angeordnet sind. Durch diese Anordnung weist das Ventil lediglich einen Deckel 5' auf, der über die Wulstränder 15 und 30 der beiden Ventilkörper 16 und 29 dicht an das Gehäuse 2 anschließt.

Der Kanal 35 in Fig. 2 erübrigt sich in Fig. 3, da der Anschluß 7 direkt an den Ringraum zwischen dem Wulstring 33 und dem Wulstrand 30 des zweiten Ventilkörpers 29 geführt ist. Die Verbindung des Ventilraumes für den ersten Ventilkörper 16 zwischen dem Wulstring 21 und dem Wulstrand 15 an den Anschluß 7 erfolgt in Fig. 3 nicht direkt, sondern über den Ringraum zwischen dem Wulstring 33 und dem Wulstrand 30 des zweiten Ventilkörpers. Dabei ist dieser Ringraum über einen Kanal 35' mit dem entsprechenden Ringraum des ersten Ventilkörpers 16 verbunden.

Das Ventil nach Fig. 3 arbeitet entsprechend dem Ventil nach Fig. 2, so daß eine Funktionsbeschreibung sich hier erübrigt.

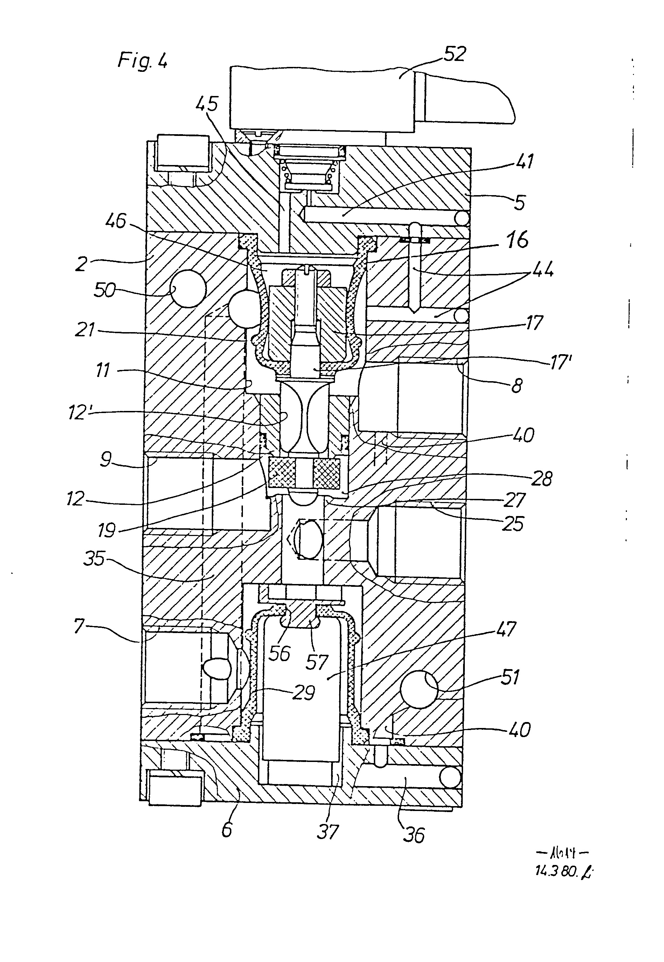

Fig. 4 zeigt eine noch weitere Ausbildung eines 4/2-Wege-Ventils im koaxialen Aufbau entsprechend Fig. 2. Auch hier sind entsprechende Teile in Fig. 2 mit dem gleichen Bezugszeichen versehen. Der Unterschied zu Fig. 2 besteht vorallem darin, daß der Anschluß 7 im Bereich des zweiten Ventilkörpers 29 und nicht im Bereich des ersten Ventilkörpers 16 angeordnet ist, was im Beispielsfalle aus Platzgründen bedingt ist. Es ist aber klar, daß der Anschluß 7 in Fig. 4 auch entsprechend wie in Fig. 2 im Bereich des ersten Ventilkörpers 16 angeordnet sein kann, wenn die obere der beiden Bohrungen 50,51 zur Befestigung des Ventilkörpers entsprechend verlegt werden.

Anders als in Fig. 2 besitzen die Ventilkörper 16 und 29 in Fig.4 Einsatzkörper 17 und 47 zur Formbegrenzung der Ventilkörper bei ihren Druckbeaufschlagungen von außen. Außerdem dient der Bolzen 17 zur Halterung des Ventilschließkörpers 19 als Führung für die axiale Bewegung des Ventilkörpers 16. Hierzu ist der Bolzen 17 mit einem kreuzartigen Querschnitt in einer Bohrung 12' zwischen der Ventilkammer 28 und dem anschließenden Ventilraum für den ersten Ventilkörper 16 geführt. Anders als in Fig. 2 ist in Fig. 4 ein Magnetventil 52 angedeutet, das die beiden Kanäle 41 und 45 im Ventildeckel 5 verbindet bzw. unterbricht.

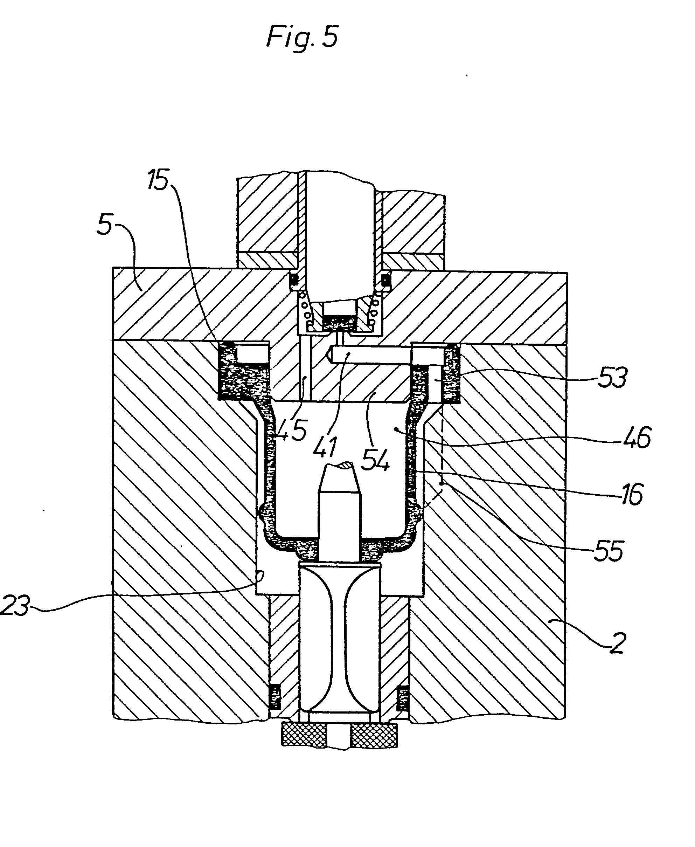

Fig. 5 zeigt noch einen abgewandelten Ausschnitt aus Fig. 4 im Bereich des ersten Ventilkörpers 16. Dieser weist im Gegensatz zu den vorstehend beschriebenen Ausführungsbeispielen einen besonderen Wulstrand 15 mit einer Öffnung 53 auf, die durch eine mit Metallhülse oder dergleichen versteift sein kann. Im Deckel 5 mit einem in den Ventilkörper hineinragenden Einsatz 54 befinden sich Bohrungen 41 und 45 entsprechend Fig. 2 und 4 jedoch mit dem Unterschied, daß der Aufwand in Fig. 5 für die Bohrungen 41 und 45, insbesondere verglichen mit Fig. 4, wesentlich geringer ist. Der Wulstrand 15 ist nach innen zu etwas abgesetzt, so daß beim Aufsetzen des Deckels 5 auf das Gehäuse 2 durch Zusammendrücken des äußeren Ringbereiches des Wulstrandes 15 ein dichter Anschluß zwischen Deckel und Gehäuse möglich ist, ohne daß der freie Durchlaß der Öffnung 53 in dem Wulstrand 15 in Mitleidenschaft gezogen wird. Wie schon gesagt, kann es zweckmäßig sein, die Öffnung 53 mit einer Metallhülse oder dergleichen zu versteifen. Der Ventilkörper 16 ist derart ausgebildet, daß er mit Vorspannung über den zentralen Deckelansatz 54 greift und diesen dicht anschließt. Damit sichergestellt ist, daß bei einer Druckbeaufschlagung des Ventilkörpers aufgrund seiner radialen Ausdehnung der Ringraum zwischen dem Wulstring 21 und dem Wulstrand 15 des Ventilkörpers nicht vor der Öffnung 53 durch den Wulstrand abgetrennt wird, kann in der Gehäusewandung zur Aufnahme des Ventilkörpers 16 eine oder mehrere Nuten vorgesehen sein, von denen eine Nut 55 in Fig. 5 gestrichelt angedeutet ist.

Wie Fig. 4 verdeutlicht, können die Ventilkörper 16 und 29 aus den gleichen topfförmigen Gummikörpern bestehen, die im Boden eine zentrale Öffnung 56 zum Anschluß der Halterung für einen Ventilschließkörper 19 aufweisen, wie er bei den ersten Ventilkörpern 16 erforderlich ist. Die Öffnung 56 des zweiten Ventilkörpers 29 ist mit einem Distanzkörper 57 verschlossen, da dieser keinen Ventilschließkörper trägt. Der Distanzkörper 57 verhindert, daß der zweite Ventilschließkörper durch axiale Verlängerung bei einer Druckbeaufschlagung seines Innenraumes die Öffnung zum Anschluß 8 bzw. 25 abschließt.

Dem Fachmann ist klar, daß der Einsatzkörper 17 nicht hohl zu sein braucht, sondern auch massiv ausgebildet sein kann. Vorteilhafterweise besitzt der Einsatzkörper außenseitig Rillen oder Nuten, die ein Anhaften des Ventilkörpers an dem Einsatzkörper verhindern. Vorteilhaft ist der Einsatzkörper in fester Verbindung mit dem Bolzen 17' bzw. einer entsprechenden Stange zum Halten des Ventilschließkörpers 19. Hierbei muß es sich nicht um Gewindebolzen oder Gewindestangen handeln. Zur Verbindung der den Ventilschließkörper 19 tragenden Bolzen oder Stangen mit dem ersten Ventilkörper können statt Muttern 18 (Fig. 1 und 2) auch Verbindungsteile gewählt werden, die mit den Bolzen oder Stangen Schnappverbindungen eingehen. Solche Verbindungsteile können vorteilhafterweise auch einstückig mit den Einsatzkörpern 17 sein, die dann, anders als in Fig. 1 und 2 gezeigt, einen bestimmten Abstand von der Innenfläche des Deckels aufweisen müssen, damit der Ventilkörper 16 sich axial zusammenziehen kann.

Weiterhin kann es von Vorteil sein, wenn die Haltevorrichtung für den Ventilschließkörper 19 die beiden Ventilkörper 16 und 29 miteinander kuppelt, so daß der eine Ventilkörper den anderen zwangsweise

12

mitsteuert. Im Beispielsfalle von Fig. 4 ist dann der Distanzkörper 57 mit dem Bolzen 17' fest verbunden. Hierzu ist der Bolzen nach unten entsprechend verlängert.

Schließlich ist es nicht unbedingt erforderlich, daß der Ventilsitz 12 in Fig. 1 und 2 von einer Gehäuseeinschnürung gebildet wird. Hier kann der Ventilsitz auch einen größeren Durchmesser aufweisen als die Ausnehmung 11.

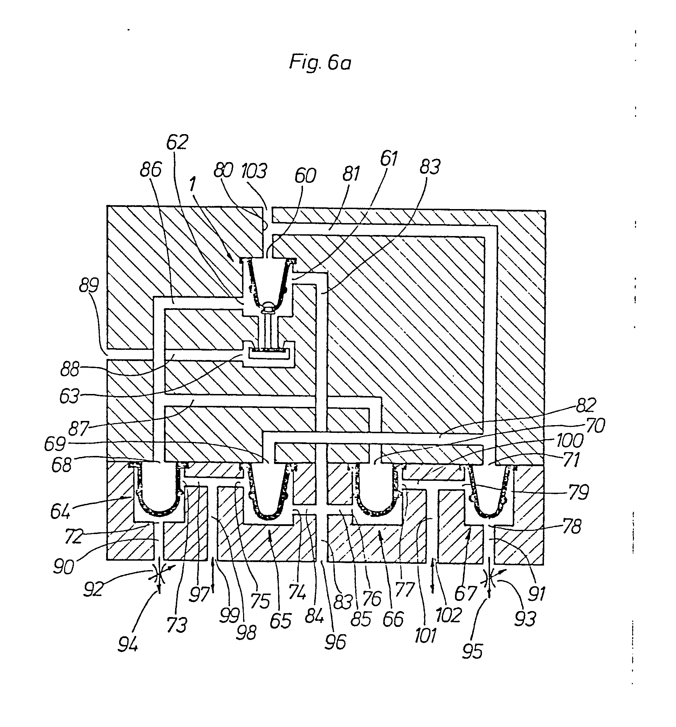

Figur 6a zeigt im prinzipiellen Aufbau ein 5/2-Wegeventil nach der Erfindung. Das Ventil besteht aus einem 3/2-Wegeventil 1, z.B. nach Figur 1, das mit vier gleich ausgebildeten 2/2-Wegeventilen 64 bis 67 zusammengeschaltet ist, von denen ein entsprechendes 2/2-Wegeventil in den Figuren 2 und 4 jeweils als Ventilkörper 29 bezeichnet ist.

Das 3/2-Wegeventil 1 besitzt einen Steueranschluß 60, an den ein pneumatisches Steuersignal abgegeben wird, um das Ventil von seiner einen dargestellten Stellung in seine andere Stellung zu bringen. Das 3/2-Wegeventil 1 besitzt die drei Anschlüsse 61, 62 und 63. In der dargestellten einen Stellung des Ventils sind die Anschlüsse 61 und 62 miteinander verbunden, während der Anschluß 63 von den Anschlüssen 61-62 abgesperrt ist. In der anderen Stellung des Ventils aufgrund eines Steuersignals am Anschluß 60 sind die Anschlüsse 62 und 63 miteinander verbunden, während der Anschluß 61 von den Anschlüssen 62 und 63 abgesperrt ist. Das 3/2-Wegeventil 1 arbeitet in der gleichen Weise wie das vorstehend beschriebene 3/2-Wegeventil 1 nach Figur 1.

Die vier 2/2-Wegeventile 64 bis 67 sind gleich ausgebildet. Die hierzu verwendeten länglichen elastischen Ventilträger können entsprechend dem länglichen elastischen Ventilkörper ausgebildet sein, wie er für das 3/2-Wegeventil 1 benutzt wird. In diesem Zusammenhang wird auch auf die vorstehende Beschreibung hingewiesen. Die 2/2 Wegeventile 64 bis 67 besitzen jeweils einen Steueranschluß 68 bzw. 69 bzw. 70 bzw. 71. Werden an die Steueranschlüsse 68 bis 71 pneumatische Steuersignale abgegeben, so werden die Ventile aus ihren einen Stellungen in die anderen Stellungen umgeschaltet.

Die Ventile 65 und 67 sind in Figur 6a in ihren einen Stellungen gezeichnet, in denen an den Steuereingängen 69 und 71 kein Steuersignal vorhanden ist. Dagegen sind die Ventile 64 und 66 in ihren anderen Stellungen gezeichnet, in denen an den Steueranschlüssen 68 und 70 Steuersignale anstehen.

Das Ventil 64 besitzt die Anschlüsse 72, 73, das Ventil 65 besitzt besitzt die Anschlüsse 74, 75, das Ventil 66 besitzt die Anschlüsse 76, 77 und das Ventil 67 besitzt die Anschlüsse 78 und 79. Die beiden Anschlüsse der 2/2-Wegeventile 64 bis 67 sind jeweils miteinander verbunden, wenn an diesen Ventilen keine Steuersignale anliegen (z.B. Ventil 65 und 67) und sie sind voneinander getrennt, wenn an diesen Ventilen Steuersignale anstehen (z.B. Ventil 64 und 66).

Der Steueranschluß 60 des 3/2-Wegeventils 1 und die Steueranschlüsse 69 und 71 der zwei 2/2 Wegeventile 65 und 67 sind über Kanäle 80, 81 und 82 miteinander verbunden. Der Anschluß 61 des 3/2 Wegeventils 1 ist über Kanäle 83, 84 und 85 an die Anschlüsse 74 und 76 der beiden 2/2-Wegeventile angeschlossen. Der Anschluß 62 des 3/2-Wegeventils 1 ist über Kanäle 86 und 87 an die Steueranschlüsse 68 und 70 der 2/2 Wegeventile 64 und 66 angeschlossen. Der Anschluß 63 des 3/2-Wegeventils 1 ist über einen Kanal 88 zum Ventilanschluß 89 entlüftet. Die Anschlüsse 72 und 78 der beiden 2/2-Wegeventile 64 und 67 sind über die Kanäle 9o und 91 und jeweils einstellbare Düsen 92 und 93 zu den Ventilanschlüssen 94 und 95 entlüftet. Der Kanal 83 ist zu einem Versorgungsanschluß 96 geführt.

Die Anschlüsse 73 und 75 der 2/2-Wegeventile 64 und 65 sind über Kanäle 97,98 an einen ersten Verbraucheranschluß 99 angeschlossen und die Anschlüsse 77 und 79 der beiden 2/2-Wegeventile 66 und 67 sind über Kanäle 100 und 101 an den einen zweiten Verbraucheranschluß 102 angeschlossen.

Das 5/2-Wegeventil nach Figur 6a besitzt also die Anschlüsse 89, 94, 95, 96, 99 und 102 von denen die Anschlüsse 89, 94 und 95 zur Entlüftung und der Anschluß 96 zur Druckluftversorgung dienen, währenddie beiden Anschlüsse 99 und 102 an den Verbraucher, zum Beispiel ein Zylinder mit beidseitig beaufschlagbaren Kolben angeschlossen sind. Der Steuerkanal 80 ist an den Ventilsteueranschluß 103 angeschlossen.

Liegt am Ventilsteueranschluß 103 kein pneumatisches Steuersignal an, dann wirkt der am Versorgungsanschluß 96 anstehende Versorgungsdruck über die durch das 3/2-Wegeventil 1 miteinander verbundenen Kanäle 83, 86 und 87 auf die Steueranschlüsse 68 und 70 der beiden 2/2-Wegeventile 64 und 66, während die Steueranschlüsse 69 und 71 der beiden anderen 2/2-Wegeventile 65 und 67 unbeaufschlagt bleiben. Die Folge ist, daß die Versorgungsluft vom Anschluß 96 über die Kanäle 83, 84 75 und 98 zu dem einen Verbraucheranschluß 99 geschaltet ist, während der andere Verbraucheranschluß 102 über die Kanäle 101, 100, 91 und die Düse 93 entlüftet ist. Wird an den Ventilsteueranschluß 103 ein Steuersignal gelegt und das 3/2-Wegeventil aus seiner dargestellten einen Stellung in seine andere Stellung umgeschaltet, so sind die Kanäle 86 und 87 an den Kanal 88 angeschlossen, der ungedrosselt zum Entlüftungsanschluß 89 geführt ist. Die 2/2-Wegeventile 64 und 66 gehen damit aus ihren gezeichneten einen Stellungen in ihre anderen Stellungen zurück, in denen ihre Anschlüsse jeweils miteinander verbunden sind. Das Steuersignal am Ventilsteueranschluß 103 wirkt über die Kanäle 81 und 82 auch auf die 2/2 Wegeventile 65 und 67 ein, die dadurch aus ihren gezeichneten einen Stellungen in ihre anderen Stellungen umgeschaltet werden, bei denen ihre Anschlüsse jeweils unterbrochen sind. Die Folge ist, daß nunmehr Versorgungsluft am Ventilanschluß 96 über die Kanäle 83, 85, 100 und 101 an den Verbraucheranschluß 102 geführt ist, während gleichzeitig der Verbraucheranschluß 99 über die Kanäle 98, 97, 90 und die Düse 92 entlüftet ist.

Je nach Einstellung der Düsen 92 und 93 erfolgt die jeweilige Entlüftung gedrosselt. Handelt es sich z.B. um die pneumatische Steuerung eines Zylinders mit beiderseitig beaufschlagbaren Kolben, so kann mittels Einstellung der Düsen 92 und 93 erreicht werden, daß der Kolben in seine beiden Endstellungen in einer bestimmten Weise gedämpft eingefahren wird. Dabei können die Düsen 92 und 93 auch unterschiedlich voneinander eingestellt sein, so daß der Kolben in seine eine Endstellung schneller gelangt als in seine gegenüberliegende andere Endstellung. Es ist klar, daß die Anschlüsse 94 und 95 zu einem Anschluß zusammengefaßt werden können, wenn die Düsen 92 und 93 nicht erfordelich sind bzw. gleich ausgebildet sein können.

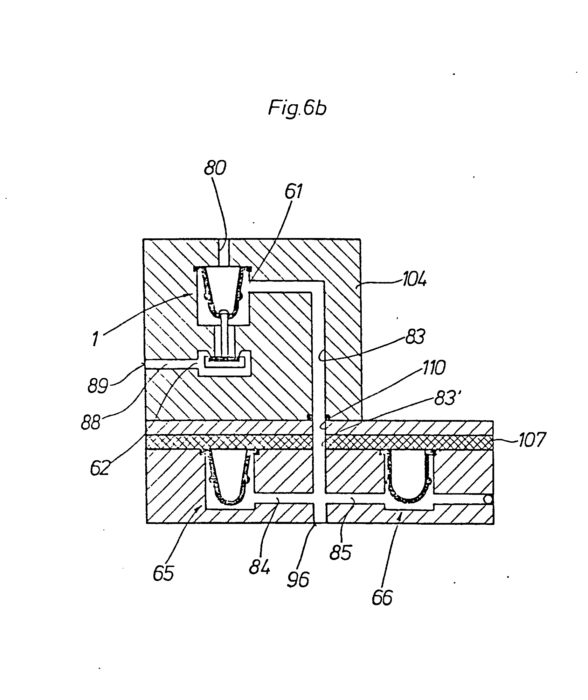

In den Figuren 6b bis 6f ist ein beispielsweiser Aufbau des 5/2 Wegeventils nach Figur 6a dargestellt, wobei in den Figuren 6b bis 6f entsprechende Teile des Ventils nach Figur 6a mit den gleichen Bezugszeichen versehen ist. Hierdurch wird deutlich, daß das Ventil aus zwei Gehäuseteilen besteht, von denen das obere Gehäuseteil das 3/2-Wegeventil 1 aufnimmt und das untere Gehäuseteil die vier 2/2-Wegeventile 64 bis 67 umfaßt. Der Vorteil besteht darin, daß das obere Gehäuseteil mit dem jeweils gleichen 3/2-Wegeventil mit verschiedenen unteren Gehäuseteilen kombiniert werden kann, die den jeweils gewünschten Anschlußquerschnitten angepaßt sind.

Das 3/2 Wegeventil 1 ist somit als ein Pilotventil in einem Ventilgehäuseteil untergebracht, das mit verschiedenen Ventilgehäuseteilen, die an den jeweiligen Verbraucher angepaßte Durchflußquerschnitte aufweisen, zu 5/2-Wegeventile zusammengesetzt werden kann. Bei einer entsprechenden Anpassung des 4/2-Wegeventils nach Figur 2 oder 4 an verschiedene Verbraucher

16

müßten beide Ventilkörper 16, 29, also das gesamte Ventil, besonders angepaßt werden.

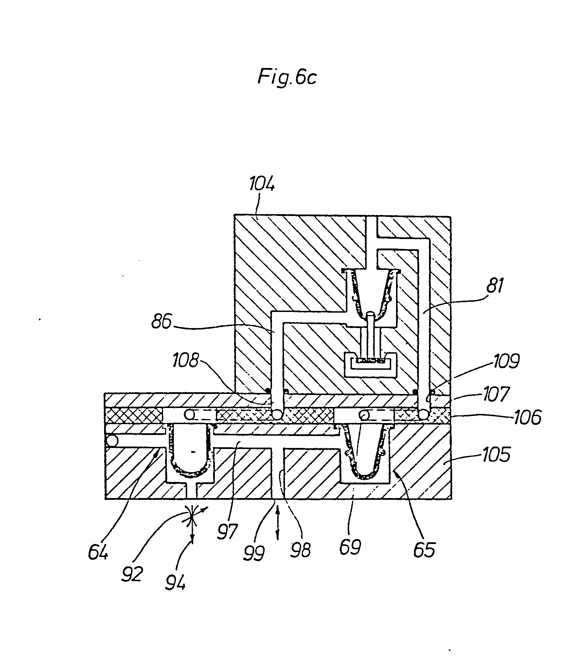

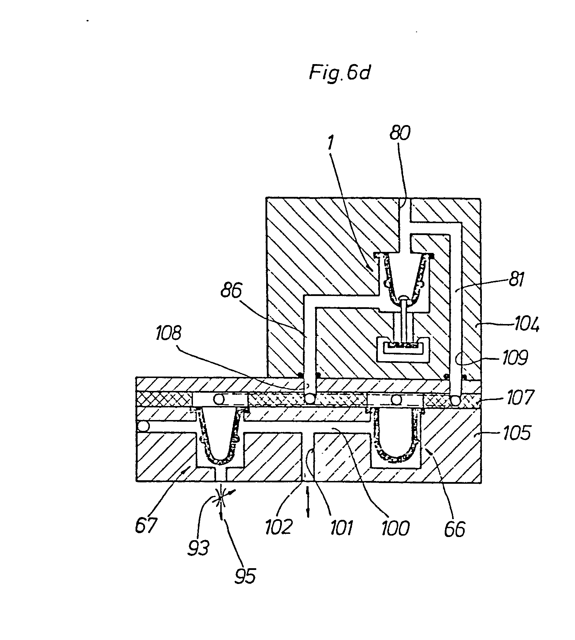

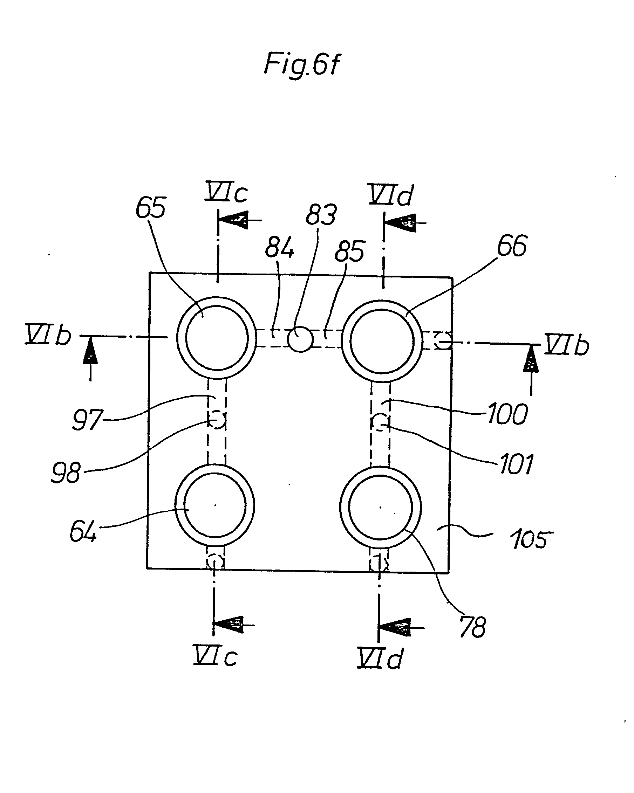

Figur 6f zeigt das untere Gehäuseteil 105 in der Draufsicht. Die Figuren 6b, 6c und 6d zeigen Schnitte durch das 5/2-Wegeventil. Die zugehörigen Schnittlinien VIb, VIc und VId sind in Figur 6f eingezeichnet. Dabei ist das untere Gehäuseteil 105 und entsprechend das obere Gehäuseteil 104 gegenüber Figur 6f vergrößert dargestellt. Außerdem verlaufen die entsprechenden Schnittlinien durch das obere würfelförmige Gehäuseteil 104 jeweils horizontal versetzt zu den Schnittlinien VIb, VIc und VId in Figur 6f, weil die Anschlußfläche des oberen Gehäuseteiles 104 kleiner ist als die Anschlußfläche des unteren Gehäuseteiles 105.

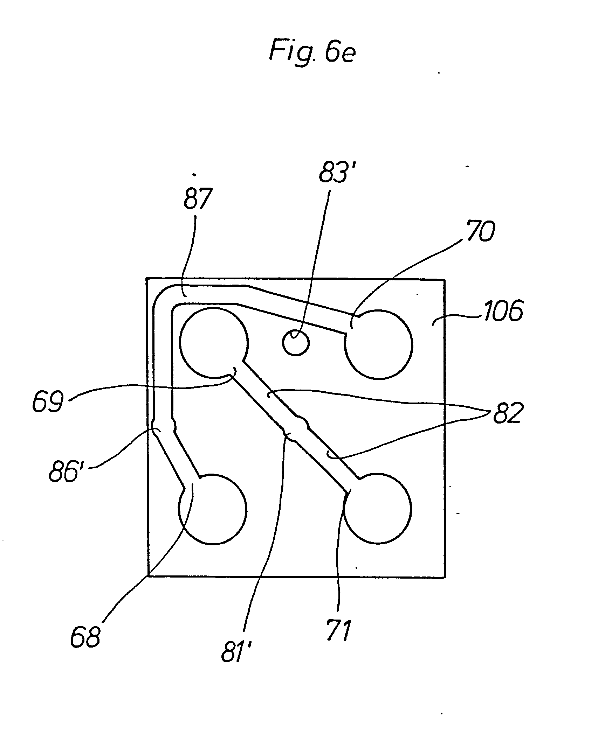

Das untere Gehäuseteil 105 ist über eine in Figur 6e gezeigte Dichtungsplatte 106 und eine Deckplatte 107 an das obere Gehäuseteil 104 angeschlossen. In der Dichtungsplatte 106 (Figuren 6c, 6e) ist ein Kanal 87 entsprechend dem Kanal 87 in Figur 6a ausgenommen, um die Steueranschlüsse 86 und 70 der beiden 2/2-Wegeventile 64 und 66 zu verbinden. An die Kanalerweiterung 86' in der Dichtungsplatte 106 schließt über eine Bohrung 108 in der Deckplatte 107 der Kanal 86 in dem oberen Gehäuseteil 104 an. In der Dichtungsplatte 106 ist ein weiterer Kanal 82 entsprechend dem Kanal 82 in Figur 6a ausgenommen, der die Steueranschlüsse 69 und 71 der beiden 2/2-Wegeventile 65 und 67 miteinander verbindet. An die Kanalerweiterung 81' schließt über eine Bohrung 109 in der Deckplatte 107 der Kanal 81 in dem oberen Gehäuseteil 104 an.

In der Dichtungsplatte 106 (Figuren 6b, 6e) ist noch eine Öffnung 83' vorgesehen, die über eine Bohrung 110 in der Deckplatte 107 an den Kanal 83 im oberen Gehäuseteil 104 angeschlossen ist. Der Kanal 83 fluchtet im unteren Gehäuseteil 105 mit einem entsprechenden Kanal, der zu dem Druckmittelversorgungsanschluß 96 geführt ist.

Knorr-Bremse GmbH
Moosacher Str. 80
8000 München 40

München, 7.3.1980
TP-pd/si
- 1614 -

A n s p r ü c h e

1. Mehrwegeventil mit mindestens einem von einem Strömungsdruckmittel beaufschlagbaren elastischen Ventilkörper, der innerhalb eines Ventilgehäuses mehrere Schaltstellungen einnehmen kann, dadurch gekennzeichnet, daß der Ventilkörper in einer ersten Schaltstellung eine erste Verbindung zwischen einem ersten und einem zweiten Anschluß freigibt und eine zweite Verbindung zwischen dem zweiten und einem dritten Anschluß unterbricht und daß der Ventilkörper in einer zweiten Schaltstellung die erste Verbindung zwischen dem ersten und dem zweiten Anschluß unterbricht und die zweite Verbindung zwischen dem zweiten und dem dritten Anschluß freigibt, oder umgekehrt.

2. Mehrwegeventil nach Anspruch 1, dadurch gekennzeichnet, daß der Ventilkörper axial wenigstens einen Ventilsitz und zusätzlich radial einen weiteren Ventilsitz betätigt und daß in den beiden Schaltstellungen des Ventilkörpers wechselweise der eine Ventilsitz offen und der andere geschlossen ist.

3. Mehrwegeventil nach Anspruch 1 oder 2, dadurch gekennzeichnet, daß der Ventilkörper aus einem länglichen elastischen Hohlkörper besteht, der mit seinem einen Ende an die Austrittsöffnung eines Druckmittelkanals angeschlossen ist und im drucklosen Zustand unter radialer und axialer Vorspannung eine Lage einnimmt, in der ein erster Ventilsitz gegenüber dem Umfang des Ventilkörpers geschlossen und ein zweiter Ventilsitz gegenüber dem vorderen geschlossenen Ende des Ventilkörpers ebenfalls geschlossen ist und daß bei Druckbeaufschlagung mit einem Druckmitteldruck durch elastisches Aufweiten in radialer Richtung der erste Ventilsitz geschlossen bleibt und durch elastische Verlängerung /in Achsrichtung der zweite Ventilsitz geöffnet wird.

des Ventilkörpers

4. Mehrwegeventil nach einem der vorstehenden Ansprüche 1 bis 3, dadurch gekennzeichnet, daß durch die elastische Verlängerung des Ventilkörpers der zweite Ventilsitz geöffnet und zusätzlich ein axial gegenüberliegender dritter Ventilsitz geschlossen wird.

5. Mehrwegeventil nach Anspruch 3 oder 4, dadurch gekennzeichnet, daß der Ventilkörper an seinem vorderen geschlossenen Ende an einer länglichen Halterung einen Ventilschließkörper trägt, der in einer Ventilkammer axial verschieblich angeordnet ist und der im drucklosen Zustand des Ventilkörpers aufgrund seiner axialen elastischen Vorspannung /gegen den zweiten Ventilsitz festgehalten ist.

oder durch Federkraft

6. Mehrwegeventil nach Anspruch 5, dadurch gekennzeichnet, daß die stangenförmig ausgebildete Halterung durch eine Öffnung in die Ventilkammer mit radialem Spiel eingreift, wobei der Öffnungsrand als der zweite Ventilsitz ausgebildet ist, der vom Ventilkörper abgewandt ist.

7. Mehrwegeventil nach den Ansprüchen 4 bis 6, dadurch gekennzeichnet, daß in der Ventilkammer gegenüber dem zweiten Ventilsitz der dritte Ventilsitz angeordnet ist und daß der Ventilschließkörper am Ventilkörper wechselweise den zweiten und dritten Ventilsitz betätigt.

8. Mehrwegeventil nach einem der vorstehenden Ansprüche, dadurch gekennzeichnet, daß der Ventilkörper am Umfang mit einem umlaufenden Wulstring versehen ist, daß gegenüber dem umlaufenden Wulstring eine Ventilgehäusewandung als Ventilsitzfläche vorhanden ist, gegen die der Wulstring bei Druckbeaufschlagung des Ventilkörpers dichtend zur Anlage kommt und daß oberhalb und unterhalb der Ventilsitzfläche Anschlußöffnungen vorhanden sind, von denen die eine zur ersten und die andere zur ersten und zweiten Verbindung gehört.

9. Mehrwegeventil nach den Ansprüchen 7 und 8, dadurch gekennzeichnet, daß von der Ventilkammer der dritte Anschluß abzweigt und daß der dritte Anschluß über den zweiten Ventilsitz an den zweiten Anschluß angeschlossen ist.

10. Mehrwegeventil nach einem oder mehreren der vorstehenden Ansprüche, dadurch gekennzeichnet, daß der radial einen ersten und axial einen zweiten Ventilsitz betätigende Ventilkörper zur Bildung eines 3/2-Wegeventils mit mindestens einem zweiten 2/2 Wegeventil zu einer Ventilbaueinheit kombiniert ist.

11. Mehrwegeventil nach Anspruch 10, dadurch gekennzeichnet, daß zur Bildung eines 4/2-Wegeventils das 3/2-Wegeventil mit einem 2/2-Wegeventil kombiniert ist, das aus einem zweiten Ventilkörper entsprechend dem ersten Ventilkörper besteht, wobei der zweite Ventilkörper nur einen der beiden Ventilsitze betätigt.

12. Mehrwegeventil nach einem oder mehreren der vorstehenden Ansprüche, dadurch gekennzeichnet, daß der erste Ventilkörper in einer ersten Kammer angeordnet ist, die bei Betätigung des radialen Ventilsitzes vom ersten Ventilkörper die erste Kammer in einen ersten und einen zweiten Ventilraum unterteilt, von denen der erste Ventilraum an einen ersten Druckmittelanschluß und der zweite Ventilraum an einen zweiten Druckmittelanschluß angeschlossen ist, daß der zweite Ventilkörper in einer zweiten Kammer angeordnet ist, der bei Betätigung des radialen Ventilsitzes vom zweiten Ventilkörper die zweite Kammer in einen dritten und einen vierten Ventilraum unterteilt, von denen der dritte Ventilraum an einen vierten Druckmittelanschluß und der vierte Ventilraum an den ersten Druckmittelanschluß angeschlossen ist, daß zur Druckmittelbeaufschlagung des zweiten Ventilkörpers zur Steuerung seines radialen Ventilsitzes ein erster Verbindungskanal einen Steuerraum zur einen Seite des zweiten Ventilkörpers mit dem zweiten Ventilraum der ersten Ventilkammer bzw. mit dem zweiten Druckmittelanschluß verbindet und daß der erste Ventilkörper einen Ventilschließkörper in einer dritten Ventilkammer steuert, die an den dritten Druckmittelanschluß angeschlossen ist und die über gegenüberliegende Ventilsitze an den zweiten Ventilraum der ersten Ventilkammer und an den dritten

4

Ventilraum der zweiten Ventilkammer angeschlossen ist, und daß die Ventilsitze wechselseitig von dem Ventilschließkörper betätigbar sind und daß zur Druckmittelbeaufschlagung des ersten Ventilkörpers zur Steuerung seines radialen Ventilsitzes und außerdem zur Umsteuerung des Ventilschließkörpers ein Steuerraum zur einen Seite des ersten Ventilkörpers über ein Magnetventil wahlweise mit einem zweiten Verbindungskanal verbindbar ist, der an den ersten Ventilraum der ersten Ventilkammer angeschlossen ist.

13. Mehrwegeventil nach Anspruch 12, dadurch gekennzeichnet, daß die drei Ventilkammern axial zueinander liegen.

14. Mehrwegeventil nach Anspruch 12, dadurch gekennzeichnet, daß die erste und zweite Ventilkammer parallel und die erste und dritte Ventilkammer koaxial zueinander liegen.

15. Mehrwegeventil nach Anspruch 3 und 12, dadurch gekennzeichnet, daß der zweite Verbindungskanal durch den Dichtungsrand des ersten Ventilkörpers geführt ist.

16. Mehrwegeventil nach Anspruch 3 und 12, dadurch gekennzeichnet, daß die beiden Ventilkörper in der gleichen Werkzeugform hergestellt sind.

17. Mehrwegeventil nach einem oder mehreren der vorstehenden Ansprüche, dadurch gekennzeichnet, daß jeweils innerhalb eines Ventilkörpers ein Einsatzkörper gehalten ist, der das Zusammendrücken des Ventilkörpers durch äußere Druckbeaufschlagung mittels Druckmittel beschränkt.

18. Mehrwegeventil nach einem oder mehreren der vorstehenden Ansprüche, dadurch gekennzeichnet, daß die elastischen Ventilkörper jeweils mit einem umlaufenden Wulstrand in eine Gehäusenut in einer Ventilgehäusestirnfläche eingreifen, die von einem Ventildeckel abgedeckt ist, wobei der Ventilkörper zwischen dem Ventilgehäuse und dem Deckel

- 5 -

eingespannt und der Wulstrand zusätzlich zur Abdichtung zwischen Ventildeckel und Ventilgehäuse dient.

19. Mehrwegeventil nach einem oder mehreren der vorstehenden Ansprüche, dadurch gekennzeichnet, daß die Haltevorrichtung zum Halten des Ventilschließkörpers zusätzlich zur Führung des ersten Ventilkörpers bei seinen axialen Bewegungen durch Längung und Verkürzung dient.

20. Mehrwegventil nach den Ansprüchen 15 und 18, dadurch gekennzeichnet, daß der axial und radial dichtende Wulstrand des ersten Ventilkörpers wenigstens eine durchgehende Öffnung besitzt, die bei der Einspannung des Wulstrandes offen bleibt und daß im Ventildeckel ein erster Kanal und im Ventilgehäuse ein zweiter Kanal vorhanden ist, die jeweils an die Öffnung anschließen und die über die Öffnung den ersten Ventilraum der ersten Ventilkammer an den Ventilraum des Magnetventiles anschließen.

21. Mehrwegeventil nach einem oder mehreren der vorstehenden Ansprüche.. 10 bis 20, dadurch gekennzeichnet, daß die beiden koaxial zueinander angeordneten Ventilkörper durch eine Stange miteinander gekoppelt sind.

22. Mehrwegeventil nach Anspruch 10, dadurch gekennzeichnet, daß zur Bildung eines 5/2-Wegeventils das 3/2-Wegeventil mit vier 2/2-Wegeventilen kombiniert ist, die jeweils aus einem zweiten Ventilkörper entsprechend dem ersten Ventilkörper bestehen, wobei die zweiten Ventilkörper jeweils nur einen der beiden Ventilsitze betätigen.

23. Mehrwegeventil nach Anspruch 22, dadurch gekennzeichnet, daß das 3/2-Wegeventil in einem ersten Gehäuseteil und die vier 2/2-Wegeventile in einem zweiten Gehäuseteil angeordnet sind und daß die beiden Gehäuseteile zur Verbindung der beiderseitigen Kanalanschlüsse in gegenüberliegenden Gehäuseanschlußseiten über eine Dichtungsplatte miteinander verbunden sind.

24. Mehrwegeventil nach Anspruch 22 und 23, dadurch gekennzeichnet, daß die 2/2-Wegeventile jeweils einen radialen Ventilsitz betätigen.

25. Mehrwegeventil nach den Ansprüchen 22 bis 24, dadurch gekennzeichnet, daß der Steuereingang des 3/2-Wegeventils mit den Steuereingängen 1. und 3. des 2/2-Wegeventils verbunden ist, daß der erste Anschluß des 3/2-Wegeventiles mit den Steuereingängen der zwei 2.und 4. 2/2-Wegeventile verbunden ist, daß der zweite Anschluß des 3/2-Wegeventils an eine Entlüftung und der dritte Anschluß des 3/2-Wegeventils an eine Druckluftquelle angeschlossen ist, daß die ersten Anschlüsse der 1. und 4. 2/2-Wegeventile an eine Entlüftung angeschlossen sind, während die entsprechenden ersten Anschlüsse der 2. und 3. 2/2-Wegeventile an die Druckluftquelle angeschlossen sind und daß die zweiten Anschlüsse der 1. und 2. 2/2-Wegeventile an einen ersten Verbraucheranschluß und die zweiten Anschlüsse der 3. und 4. 2/2-Wegeventile an einen zweiten Verbraucheranschluß angeschlossen sind.

26. Mehrwegeventil nach Anspruch 25, daß wenigstens in einem der Entlüftungsanschlüsse des 1. und 4. 2/2-Wegeventils eine einstellbare Drossel vorgeschaltet ist.

## Fig.1

Fig. 2

Fig.3

Fig. 4

Fig. 5

Fig. 6a

Fig.6b

Fig. 6c

*Fig.6d*

## Fig. 6e

## Fig.6f

0036980

# EUROPÄISCHER RECHERCHENBERICHT

**Europäisches Patentamt**

Nummer der Anmeldung

EP 81101808.4

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - B - 1 550 383 (LUCIFER S.A.)  + Gesamt +  -- | 1-7,13 | F 16 K 11/00 |
| A | DE - B - 1 525 651 (GREER)  + Gesamt +  -- | 1,3,18 | |
| | DE - B - 1 917 597 (BÜRKERT)  + Gesamt +  -- | 1,2,4-6 | |
| | AT - B - 325 912 (FESTO)  + Gesamt +  -- | 1,2,4-7,13, 21 | |
| A | AT - B - 346 143 (BOSCH)  + Seite 3, Zeilen 29-46; Fig.5 +  ---- | | |

**RECHERCHIERTE SACHGEBIETE (Int. Cl.³)**

F 16 K 7/00
F 16 K 11/00
G 05 D 7/00
G 05 D 11/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 29-05-1981 | ROUSSARIAN |

EPA form 1503.1 06.78